# FASCICULE DE BREVET EUROPEEN

(11) **EP 3 760 594 B1**
(45) Date de publication et mention de la délivrance du brevet: **30.10.2024**
(21) Numéro de dépôt: 20190329.1
(22) Date de dépôt: 03.06.2016
(51) Int. Cl.: C02F 11/10, C10L 9/08, F23G 5/027, F23G 7/00, C02F 1/30

(54) **PROCÉDÉ ET DISPOSITIF DE CARBONISATION HYDROTHERMALE À RENDEMENT ÉNERGÉTIQUE OPTIMISE**
VERFAHREN UND VORRICHTUNG ZUR HYDROTHERMALEN KARBONISIERUNG MIT OPTIMIERTER ENERGIEEFFIZIENZ
METHOD AND DEVICE FOR HYDROTHERMAL CARBONISATION WITH OPTIMISED ENERGY EFFICIENCY

(30) Priorité: 05.06.2015 FR 1555149
(43) Date de publication de la demande: 06.01.2021
(62) Demande divisionnaire de: 16730725.5
(73) Titulaire: SUEZ International, 92040 Paris La Défense (FR)
(72) Inventeur: PARDO, Pierre Emmanuel, 91400 Orsay (FR); BOURDAIS, Jean-Louis, 44110 Chateaubriant (FR)
(74) Mandataire: LLR

(56) Documents cités:
- WO-A1-2014/178028
- ZHENYU CHEN ET AL: "Microwave Drying of Wastewater Sewage Sludge", JOURNAL OF CLEAN ENERGY TECHNOLOGIES, 31 July 2014 (2014-07-31), pages 282 - 286, XP055209569, ISSN: 1793-821X, DOI: 10.7763/JOCET.2014.V2.140

## Description

### Domaine technique

La présente invention concerne un procédé et un dispositif de carbonisation hydrothermale.

Le domaine de l'invention est plus particulièrement mais de manière non limitative celui du traitement de boues fortement chargées en matières organiques, provenant par exemple de processus de dépollution d'eaux usées urbaines ou industrielles, ou d'opérations de curage de réseaux. Un tel traitement vise à réduire le volume des boues, à les stabiliser sur le plan biologique et sur le plan physico-chimique et à produire des sous-produits valorisables.

L'invention concerne plus particulièrement le domaine du procédé et dispositif de carbonisation hydrothermale en continu de boues contenant de la matière organique.

### Etat de la technique antérieure

L'état de l'art a développé deux familles de traitements :
- l'hydrolyse thermique,
- la carbonisation hydrothermale.

La technique d'hydrolyse thermique des boues a été mise au point par Porteous au début du 20ème siècle. Cette technique met en oeuvre des réacteurs sous pression, fonctionnant par séquence. Typiquement, les boues sont pompées dans un premier réacteur dans lequel de la vapeur produite par une chaudière est injectée jusqu'à l'obtention d'une température d'environ 180°C pour une pression de 1,5 MPa à l'intérieur de ce premier réacteur, la température y est ensuite maintenue pendant 30 minutes puis les boues sont évacuées sous leur propre pression à travers un échangeur thermique. Cet échangeur thermique est utilisé pour récupérer de la chaleur contenue dans les boues sortant du premier réacteur et pour réchauffer les boues avant leur entrée dans un deuxième réacteur. De nombreuses évolutions et améliorations sont intervenues depuis pour améliorer la productivité et assurer un fonctionnement en continu. Les boues hydrolysées, c'est-à-dire ayant subies un tel traitement dans un réacteur, font ensuite l'objet de traitements biologiques, par exemple de digestion anaérobie pour réduire les quantités de boues en produisant du biogaz.

La technique de la carbonisation hydrothermale (HTC) se rapproche de l'hydrolyse thermique mais ne vise pas à préparer des boues en vue de leur digestion, elle vise plutôt à la transformation des boues en bio-charbon carboneutre de grande qualité, par le recours à la chaleur et à une pression généralement plus élevée que dans l'hydrolyse thermique, et en assurant un temps de séjour des boues plus long que pour l'hydrolyse thermique (quelques heures) et généralement en présence d'un réactif.

La technique HTC permet également de produire du biocharbon, un produit semblable à l'humus, qui peut être employé pour amender les sols agricoles et stocker le CO2. La technique de carbonisation hydrothermale a été décrite en 1913 par Friedrich Bergius, et lui a valu le Prix Nobel de chimie en 1931.

On connaît dans l'état de la technique le brevet FR3010403 qui décrit un procédé et un dispositif pour l'hydrolyse thermique de boues contenant de la matière organique, ledit procédé comprenant des étapes consistant à :
- réaliser simultanément une injection de vapeur de récupération dans lesdites boues et un mélange desdites boues avec ladite vapeur de récupération au moyen d'un injecteur-mélangeur dynamique primaire de façon à obtenir un mélange uniforme primaire ;
- réaliser simultanément une injection de vapeur vive dans ledit mélange uniforme primaire et un mélange dudit mélange uniforme primaire avec ladite vapeur vive au moyen d'un injecteur-mélangeur dynamique secondaire de façon à obtenir un mélange uniforme secondaire ;
- acheminer ledit mélange uniforme secondaire vers un réacteur tubulaire sous pression et provoquer l'écoulement essentiellement en flux piston de ce mélange uniforme secondaire dans ledit réacteur tubulaire selon un temps de séjour suffisant et à une température suffisante pour permettre l'hydrolyse thermique de la matière organique présente dans ce mélange uniforme secondaire ;
- produire ladite vapeur de récupération au sein de moyens de production de vapeur de récupération à partir dudit mélange uniforme secondaire obtenu en sortie dudit réacteur tubulaire ;
- refroidir ledit mélange uniforme secondaire à sa sortie desdits moyens de production de vapeur de récupération à une température permettant une digestion ultérieure de la matière organique hydrolysée qu'il contient.

Le brevet américain US8673112 décrit aussi un procédé pour l'hydrolyse thermique consistant à :
(i) amener de la biomasse (en particulier des boues) de manière approximativement continue pour lui faire subir une première étape de préchauffage et la préchauffer,
(ii) entraîner séquentiellement la biomasse préchauffée dans au moins deux réacteurs,
(iii) chauffer et mettre un réacteur sous pression par ajout de vapeur,
(iv) maintenir les réacteurs à une certaine température et pression pendant un certain temps,
(v) amener la biomasse chauffée et sous pression provenant des réacteurs dans un premier réservoir de décompression sans réduction substantielle quelconque de pression et décompression rapide de la biomasse, au moyen d'une buse, afin de la désintégrer,
(vi) transférer la biomasse du premier réservoir de décompression dans un second réservoir de décompression dont la pression est inférieure à la pression du premier réservoir de décompression,
(vii) et amener la biomasse ainsi traitée dans une installation aval pour lui faire subir un traitement ultérieur.

Ce brevet américain US8673112 concerne aussi un dispositif pour le traitement thermique de la biomasse.

La demande de brevet internationale WO2014135734 décrit un procédé qui fonctionne en continu pour l'hydrolyse thermique de matière organique, comprenant une étape de préchauffage, une étape ultérieure de réaction et une étape de dépressurisation. L'étape de préchauffage comprend une recirculation de la matière organique à hydrolyser dans un premier circuit de recirculation; l'étape de réaction comprend une recirculation dans un deuxième circuit de recirculation de la matière organique extraite du premier circuit de recirculation en la soumettant à une certaine pression et à une certaine température; et l'étape de dépressurisation comprend une décompression subie de la matière organique extraite en continu du deuxième circuit.

Un autre procédé connu de l'art antérieur est décrit dans le brevet WO2014178028.

### Inconvénients des solutions de l'art antérieur

Les solutions de l'art antérieur, notamment de la demande de brevet internationale WO2014135734, sont plus adaptées à des applications d'hydrolyse thermique suivie par une étape de digestion bactérienne. Pour de telles applications, les niveaux de pression et de température au sein du réacteur sont relativement modérés, de l'ordre de 0,6 MPa et de 160°C. Pour des applications de type hydrocarbonisation, les niveaux de pression et de température sont nettement supérieurs, de l'ordre de 3 MPa et de 200°C.

De ce fait, la solution d'un injecteur mélangeur à l'entrée du réacteur n'est pas adaptée à l'application d'hydrocarbonisation. En effet, pour atteindre les températures requises, il faut apporter plus de vapeur ce qui conduit à une dilution préjudiciable au bon fonctionnement du réacteur, ainsi que des équipements de post-traitement en aval. Les conditions requises de pression et de température conduisent à des contraintes élevées sur l'équipement d'injection, induisant des fuites et des corrosions préjudiciables à la durée de vie de l'équipement.

Par ailleurs, l'augmentation de la température des boues injectées dans le réacteur par préchauffage réduit leur viscosité apparente, à siccité inchangée, jusqu'à obtenir une viscosité voisine de celle de l'eau, la siccité étant définie par la teneur en matières sèches de la biomasse ou des boues.

Dans la solution proposée par le brevet américain US8673112, l'installation nécessite une pluralité de cuves de réaction ce qui complique considérablement l'installation et n'est pas compatible avec un fonctionnement en continu.

Le but de la présente invention est de résoudre au moins un des problèmes ou inconvénients susmentionnés.

### Exposé de l'invention

A cet effet, l'invention propose un procédé de carbonisation hydrothermale en continu de boues contenant de la matière organique, lesdites boues présentant une siccité comprise entre 10 et 30%, ledit procédé comportant une étape de réaction hydrothermale mise en oeuvre dans un réacteur (4), l'étape de réaction hydrothermale comprenant les étapes suivantes:
- une étape d'introduction de boues dans laquelle on introduit les boues dans le réacteur (4) par une première entrée (11),
- une étape d'injection endogène de vapeur dans laquelle on injecte de la vapeur dans le réacteur (4) par une deuxième entrée (15),
- une étape d'extraction dans laquelle on extrait en continu au moins une partie des boues contenues dans le réacteur (4) par une sortie de boues (16),

caractérisé en ce qu'il comporte en outre une étape de préchauffage dans laquelle on élève la température des boues avant leur introduction dans le réacteur (4) jusqu'à une température de préchauffage supérieure à 70°C,
en ce que la deuxième entrée (15) est distincte de la première entrée (11),
en ce que l'étape de préchauffage comprend une étape d'injection exogène de vapeur dans laquelle on injecte de la vapeur dans les boues avant leur introduction dans le réacteur (4),
et en ce qu'il comporte en outre une étape de chauffage additionnel dans laquelle on élève la température des boues ayant subies l'étape de préchauffage avant leur introduction dans le réacteur (4) en transférant à ces boues de la chaleur contenue dans les boues extraites du réacteur (4).

Le terme « endogène » renvoie au fait que la vapeur est injectée dans les boues contenues dans le réacteur, par opposition au terme « exogène » renvoyant à une injection de vapeur dans les boues se trouvant en-dehors du réacteur.

Dans cette description, on entend par l'expression « extrait en continu » une extraction en continu avec un débit éventuellement variable, de préférence pilotée par des paramètres de fonctionnement du réacteur. Une telle extraction en continu peut être interrompue temporairement lorsque les régulations n'ont pas suffi à retrouver l'équilibre du procédé de carbonisation hydrothermale. L'extraction en continu n'est pas une extraction séquentielle, et n'est pas une extraction en lot ou en « batch ».

L'étape de préchauffage peut comprendre une étape d'injection de micro-ondes dans laquelle on injecte des micro-ondes dans les boues avant leur introduction dans le réacteur.

L'étape de préchauffage peut comprendre une étape de recirculation dans laquelle on prélève une fraction des boues contenues dans le réacteur et dans laquelle on mélange cette fraction avec les boues avant leur introduction dans le réacteur.

De préférence, le procédé peut comprendre en outre une étape de mise en circulation dans laquelle on met un mélange constitué par les boues contenues dans le réacteur et la vapeur injectée dans le réacteur en circulation au sein du réacteur.

Le procédé selon l'invention peut comporter en outre une étape de chauffage d'eau dans laquelle on transfère de la chaleur contenue dans les boues extraites du réacteur à de l'eau par l'intermédiaire d'un échangeur de chaleur, et dans laquelle on utilise l'eau ainsi chauffée pour produire tout ou partie de la vapeur utilisée lors de l'étape d'injection endogène de vapeur.

L'invention concerne aussi un dispositif de carbonisation hydrothermale en continu de boues contenant de la matière organique, lesdites boues présentant une siccité comprise entre 10 et 30%, ce dispositif comprenant un réacteur (4) comportant:
- une première entrée (11) agencée pour introduire les boues dans le réacteur (4);
- une deuxième entrée (15) agencée pour injecter directement dans le réacteur (4) de la vapeur,
- une sortie de boues (16) agencée pour extraire du réacteur (4) en continu au moins une partie des boues qu'il contient,

caractérisé en ce qu'il comprend en outre un moyen de préchauffage (2) en amont de la première entrée (11), ce moyen de préchauffage (2) étant agencé pour recevoir les boues avant leur introduction dans le réacteur (4) et pour élever la température des boues qu'il reçoit jusqu'à une température de préchauffage supérieure à 70°C,
en ce que la deuxième entrée (15) est distincte de la première entrée (11),
en ce que le moyen de préchauffage (2) est agencé pour injecter de la vapeur dans les boues qu'il reçoit,
et en ce qu'il comprend en outre des moyens de chauffage additionnels (91, 92, 93, 94) agencés pour transférer de la chaleur contenue dans les boues extraites du réacteur (4) aux boues en aval du moyen de préchauffage (2) et en amont du réacteur (4), de manière à élever la température des boues en aval du moyen de préchauffage (2) et en amont du réacteur (4).

Selon une caractéristique avantageuse, le moyen de préchauffage peut être agencé pour injecter des micro-ondes dans les boues qu'il reçoit.

Selon encore une autre caractéristique avantageuse, le dispositif peut comprendre une boucle de recirculation agencée pour prélever une fraction des boues contenues dans le réacteur et pour mélanger cette fraction avec les boues reçues par le moyen de préchauffage.

Le dispositif selon l'invention peut comprendre en outre un échangeur de chaleur et une chaudière, cet échangeur de chaleur étant agencé pour transférer de la chaleur contenue dans les boues extraites du réacteur à de l'eau circulant entre cet échangeur de chaleur et la chaudière, la chaudière étant agencée pour fournir tout ou partie de la vapeur injectée dans le réacteur par la deuxième entrée.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 représente une vue schématique d'une première variante du dispositif (hors de l'étendue de la présente invention)
- la figure 2 représente une vue schématique d'une deuxième variante du dispositif selon l'invention,
- la figure 3 représente une vue schématique d'une troisième variante du dispositif selon l'invention,
- la figure 4 représente une vue schématique d'une quatrième variante du dispositif (hors de l'étendue de la présente invention).

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Dans la présente description de modes de réalisations et variantes, la vapeur est par défaut de la vapeur d'eau.

Par défaut, toute pression indiquée dans la présente description est une pression absolue.

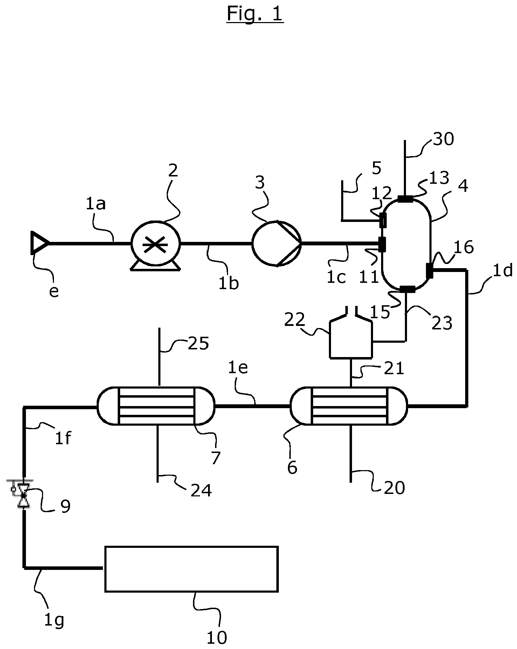

La figure 1 est un exemple de dispositif de carbonisation hydrothermale en continu de boues (hors de l'étendue de la présente invention). Ce dispositif comprend un réacteur 4 agencé pour mettre en oeuvre une étape de réaction hydrothermale.

Cette étape de réaction hydrothermale comprend les étapes suivantes :
- une étape d'introduction de boues dans laquelle on introduit les boues dans le réacteur 4 par une première entrée 11,
- une étape d'injection endogène de vapeur dans laquelle on injecte de la vapeur dans le réacteur 4 par une deuxième entrée 15,
- une étape d'extraction dans laquelle on extrait en continu au moins une partie des boues contenues dans le réacteur 4 par une sortie de boues 16.

Ainsi, dans le réacteur 4 :
- la première entrée 11 est agencée pour introduire les boues dans le réacteur 4,
- la deuxième entrée 15 est agencée pour injecter directement dans le réacteur 4 de la vapeur,
- la sortie de boues 16 est agencée pour extraire du réacteur 4 en continu au moins une partie des boues qu'il contient.

Les boues injectées dans le réacteur 4 par la première entrée 11 sont acheminées comme décrit ci-dessous.

En premier lieu, les boues, contenant de la matière organique, sont introduites dans le dispositif par une entrée e en provenance par exemple d'une trémie (non représentée) pour être acheminées dans un conduit 1a, par exemple par gravité. Les boues arrivant dans le conduit 1a ont typiquement une siccité en poids de matière sèche comprise entre 10 à 30%, typiquement comprise entre 18 et 24%.

Ces boues sont acheminées par le conduit 1a jusqu'à un moyen de préchauffage 2 de manière continue par un appareil (non représenté) tel qu'une pompe, une vis, un appareil faisant intervenir la gravité, un transporteur mécanique ou tout moyen permettant d'acheminer les boues au moyen de préchauffage 2 en amont de la première entrée 11.

Le moyen de préchauffage 2 est agencé pour recevoir les boues avant leur introduction dans le réacteur 4 et pour élever la température des boues qu'il reçoit jusqu'à une température de préchauffage supérieure à 70°C. Le moyen de préchauffage 2 permet ainsi de réaliser une étape de préchauffage dans laquelle on élève la température des boues avant leur introduction dans le réacteur 4 jusqu'à cette température de préchauffage.

Dans le mode de réalisation de la figure 1, le moyen de préchauffage 2 est agencé pour injecter des micro-ondes dans les boues qu'il reçoit. Ainsi, l'étape de préchauffage comprend une étape d'injection de micro-ondes dans laquelle on injecte des micro-ondes dans les boues avant leur introduction dans le réacteur 4. Cette étape d'injection de micro-ondes permet d'élever la température des boues jusqu'à la température de préchauffage.

Le moyen de préchauffage 2 est donc un équipement de chauffage par micro-ondes, dont la puissance est adaptée pour faire passer les boues, introduites à température ambiante, à une température d'environ 70°C.

Le moyen de préchauffage 2 comprend de préférence une enceinte tubulaire (non représentée) non métallique, par exemple réalisée dans un polymère tel que le polyester armé de fibres de verre (« SVR ») ou le polypropylène homopolymère (« PPH »). Cette enceinte tubulaire traverse une zone d'action (non représentée) dans laquelle sont générées des micro-ondes assurant un chauffage en continu des boues acheminée dans cette enceinte tubulaire. Les matériaux du moyen de préchauffage 2 sont adaptés à la faible pression des boues acheminées dans l'enceinte tubulaire, proche de la pression atmosphérique, typiquement inférieure à 2 bars, et de leur température, préférentiellement inférieure à 90°C.

L'enceinte tubulaire du moyen de préchauffage 2 est de préférence fermée ou protégée par une grille métallique apte à confiner les micro-ondes.

Les boues sont ensuite acheminées vers une pompe 3 par un conduit 1b reliant le moyen de préchauffage 2 et la pompe 3, puis vers le réacteur 4 par un conduit 1c reliant la pompe 3 et la première entrée 11 du réacteur 4.

Le moyen de préchauffage 2 peut fonctionner en continu ou encore en lot (ou « batch »).

Dans le cas d'un fonctionnement en continu du moyen de préchauffage 2, les boues et les micro-ondes interagissent tout au long de leur trajet dans le conduit 1b en amont de la pompe 3.

Les boues entrant dans le dispositif contenant de 70 à 90% d'eau, elles constituent un milieu particulièrement propice au chauffage par micro-ondes, les micro-ondes pouvant rentrer en profondeur dans les boues et exciter ainsi des molécules d'eau qu'elles contiennent.

La température de préchauffage est de préférence comprise entre 60 et 150°C en fonction des besoins du procédé. D'un point de vue optimal, cette température de préchauffage est de 70°C, une telle température de préchauffage permettant de diminuer sensiblement la viscosité des boues et étant compatibles avec les matériaux typiquement utilisés pour former la pompe 3.

Ainsi, les boues ayant subies l'étape de préchauffage sont liquéfiées.

Les boues liquéfiées sont introduites dans le réacteur 4, qui est un réacteur de carbonisation hydrothermale, par la première entrée 11 sous l'effet de la force motrice produite par la pompe 3.

De préférence, les boues sont injectées directement et en continu dans le réacteur 4 de telle manière qu'elles soient intégrées rapidement au mélange contenu dans le réacteur 4, ce mélange étant constitué par les boues contenues dans le réacteur 4 et la vapeur injectée dans ce réacteur 4. Dans ce mode de réalisation, la deuxième entrée 15 d'introduction des boues est distincte de la première entrée 11 d'injection de vapeur dans le réacteur 4.

De préférence, le procédé comprend en outre une étape de mise en circulation dans laquelle on met le mélange en circulation au sein du réacteur 4.

Dans la présente description, le terme « circulation » de boues, d'un mélange ou d'un liquide dans le réacteur 4 désigne un mouvement quelconque de ces boues, de ce mélange ou de ce liquide dans le réacteur 4.

Dans la présente description, l'expression « chemin de circulation » désigne le chemin le long duquel ce mouvement quelconque est effectué dans le réacteur.

Dans la présente description, par l'expression « mise en circulation » des boues, du mélange ou d'un liquide dans le réacteur, on entend une création ou un maintien, directement à l'intérieur du réacteur 4, de la circulation (i.e. du mouvement) des boues, du mélange ou du liquide dans le réacteur, de préférence indépendamment de l'amplitude et de la direction de la vitesse d'introduction des boues dans le réacteur 4 par la première entrée 11.

Cette mise en circulation est effectuée par des moyens de mise en circulation qui comprennent typiquement un circulateur (non représenté), par exemple à pâles, agencé pour faire circuler les boues dans l'espace intérieur du réacteur 4 suivant le chemin de circulation.

Par « moyens de mise en circulation » ou « circulateur » des boues, du mélange ou d'un liquide dans le réacteur, on entend dans la présente description des moyens agencés pour créer ou maintenir directement à l'intérieur du réacteur 4 la circulation (i.e. le mouvement) des boues, du mélange ou du liquide, de préférence indépendamment de l'amplitude et de la direction de la vitesse d'introduction des boues dans le réacteur 4 par la première entrée 11.

Selon des variantes non représentées, ce circulateur peut comprendre :
- un agitateur avec une ou plusieurs pales, et/ou
- une vis, et/ou
- une pompe, et/ou
- une boucle de recirculation des boues, et/ou
- un bullage.

Grâce à la liquéfaction des boues en amont du réacteur 4, leur interaction avec la vapeur injectée dans le réacteur 4 est grandement facilitée et cette vapeur se condense rapidement dans le mélange, permettant l'obtention de la température désirée, typiquement de l'ordre de 160-250°C, préférentiellement de 180-200°C.

Typiquement, la pression et la température de la vapeur injectée dans le réacteur 4 par la deuxième entrée 15 sont respectivement de l'ordre de 0,6-4 MPa et de 160-250°C, préférentiellement de 2-2,5 MPa et de 215-225°C.

Selon ce mode de réalisation, le réacteur 4 comprend une entrée de réactif 12 relié à un conduit d'injection de réactif 5, permettant d'injecter dans le réacteur 4 un réactif, par exemple un acide tel que l'acide sulfurique. Une telle injection de réactif favorise les réactions de carbonisation des boues dans le réacteur 4.

De préférence, l'espace intérieur du réacteur 4 recevant les boues est configuré pour former un volume de dégazage (non représenté) dans une partie supérieure de cet espace intérieur (c'est-à-dire une partie d'altitude plus élevée que d'autres parties de cet espace intérieur). Dans ce volume de dégazage, le mélange ne circule pas. Ce volume de dégazage est agencé pour récupérer des incondensables gazeux. Le réacteur 4 est aussi pourvu d'une sortie des incondensables 13 reliant le volume de dégazage à un conduit d'évacuation 30. Cette sortie des incondensables 13 est typiquement pilotée par une vanne pour contrôler la pression dans le réacteur 4.

La sortie de boues 16 est agencée pour extraire du réacteur 4 en continu au moins une partie des boues qu'il contient.

Le dispositif de la figure 1 permet aussi de mettre en oeuvre au moins une étape de refroidissement dans laquelle les boues ayant subies l'étape de réaction hydrothermale sont refroidies. L'au moins une étape de refroidissement est décrite ci-dessous.

Le dispositif est agencé pour réaliser une étape de chauffage d'eau dans laquelle on transfère de la chaleur contenue dans les boues extraites du réacteur 4 à l'eau par l'intermédiaire d'échangeur de chaleur 6, et dans laquelle on utilise l'eau ainsi chauffée pour produire la vapeur utilisée lors de l'étape d'injection endogène de vapeur.

Pour ce faire, le dispositif de la figure 1 comprend un échangeur de chaleur 6 relié à la sortie de boues 16 par le conduit 1d. Ce dispositif comprend aussi une chaudière 22 reliée à cet échangeur de chaleur 6 par un conduit 21. Cet échangeur de chaleur 6 est agencé pour transférer de la chaleur contenue dans les boues extraites du réacteur 4 à de l'eau circulant entre cet échangeur de chaleur 6 et la chaudière 22 par le conduit 21. La chaudière 22, alimentée par une autre source d'énergie (non représentée), est agencée pour fournir la vapeur injectée directement dans le réacteur 4 via un conduit 23 relié à la deuxième entrée 15.

L'eau circulant dans cet échangeur de chaleur 6 est typiquement chauffée jusqu'à une température comprise entre 120 et 260°C, typiquement comprise entre 160 et 170°C. Cette eau chauffée dans l'échangeur de chaleur 6 est conduite à la chaudière 22 par le conduit 21 qui va produire la vapeur directement injectée dans le réacteur 4 par la deuxième entrée 15.

L'eau arrivant par un conduit 20 dans cet échangeur de chaleur 6 a une qualité adéquate à la production de vapeur (adoucissement, déminéralisation, ...).

Cet échangeur de chaleur 6 peut être de tout type adapté à un tel échange, par exemple de type tube dans tube, à tube de fumées, tubes calandre...

Une telle étape de chauffage d'eau par récupération de chaleur contenue dans les boues extraites du réacteur 4 permet une diminution de la consommation énergétique du dispositif.

Le dispositif de la figure 1 comprend aussi un équipement de refroidissement 7 agencé pour refroidir les boues extraites du réacteur 4 en provenance de l'échangeur de chaleur 6 par le conduit 1e les reliant. Ainsi, cet équipement de refroidissement 7 est monté en aval de l'échangeur de chaleur 6.

Les boues partiellement refroidies par l'échangeur de chaleur 6 sont acheminées via le conduit 1e dans cet équipement refroidissement 7 qui réalise une étape de refroidissement final. Cet équipement de refroidissement 7 est mis en oeuvre de sorte que la température des boues ensuite acheminées vers un module de traitement final de déshydratation 10 par les conduits 1f, 1g atteignent une température définie avant leur arrivé dans ce module 10. Cette température définie est typiquement comprise entre 40 et 90°C, typiquement comprise entre 60 et 70°C.

Pour réaliser cette étape de refroidissement final, l'équipement de refroidissement 7 peut être un échangeur dans lequel circulent d'une part les boues et d'autre part un fluide de type eau, air ou tout fluide de refroidissement disponible. Un tel fluide de refroidissement arrive dans cet équipement de refroidissement ou échangeur 7 par un conduit 24 et en ressort par un conduit 25. Le type de l'échangeur est par exemple un échangeur de type tube dans tube ou tube dans circuit de fumées.

En sortie de cet équipement de refroidissement 7, les boues arrivent dans un organe déprimogène 9 par le conduit 1f permettant à ces boues d'atteindre une pression proche de la pression atmosphérique avant le traitement final de déshydratation dans le module 10. L'organe déprimogène 9 et le module de traitement final de déshydratation 10 sont reliés l'un à l'autre par le conduit 1g.

Cet organe déprimogène 9 peut être une pompe, une vanne, un diaphragme ou tout accessoire permettant d'abaisser ainsi la pression des boues.

Dans les solutions de l'art antérieur prévoyant un injecteur mélangeur en amont du réacteur, on injecte dans le réacteur une substance homogène dont la siccité est diminuée (elle contient plus d'eau en raison de l'apport de vapeur). Dans ces solutions, il n'y a pas d'interaction, à l'intérieur du réacteur, entre des boues et la vapeur injectée.

Cet équipement se distingue de manière essentielle des solutions de l'art antérieur par l'utilisation simultanée :
1) du préchauffage des boues en amont du réacteur 4 par un moyen différent de la vapeur uniquement ce qui permet de réduire leur viscosité sans réduire leur siccité et de diminuer le besoin de chauffage dans le réacteur 4,
2) du découplage :
   a) de l'introduction des boues dans le réacteur 4 par la première entrée 11, ces boues introduites étant préchauffées pour réduire leur viscosité, maintenir leur siccité et réduire les besoins d'apport énergétique au sein du réacteur 4,
   b) de l'injection de vapeur dans le réacteur 4 par la deuxième entrée 15 distincte de la première entrée 11. Optionnellement, la vapeur peut être injectée non pas via une unique entrée 15 mais via plusieurs entrées distinctes (non représentées), de façon à optimiser les zones d'interaction entre le mélange contenu dans le réacteur 4 et la vapeur injectée, et à optimiser la régulation des conditions de température au sein du réacteur 4. Chacune de ces entrées distinctes d'injection de vapeur peut être équipée d'une vanne permettant un pilotage fin des conditions d'injection de vapeur et donc du fonctionnement du réacteur 4. Elles peuvent notamment être réparties sur un chemin de circulation du mélange au sein du réacteur 4,
3) du préchauffage de l'eau pour la production de la vapeur injectée dans le réacteur 4.

Dans un tel mode de réalisation, le mélange et les interactions entre les boues préchauffées et la vapeur injectée dans le réacteur 4 se font uniquement à l'intérieur du réacteur 4. Cette interaction entre boues et vapeur permet non seulement d'augmenter la température des boues circulant dans le réacteur 4 par échange thermique, mais aussi de créer un brassage des boues en raison des turbulences se produisant dans des zones de rencontre du mélange circulant et l'arrivée de vapeur.

Enfin, un tel découplage permet de piloter de manière optimale la qualité de vapeur injectée, notamment dans le cas d'un réacteur de grand volume, pour des traitements long, de l'ordre de 3 heures de temps de parcours au sein du réacteur typiquement nécessaire à la carbonisation hydrothermale, par rapport aux 30 minutes de temps moyen de circulation requis pour l'hydrolyse thermique.

Par conséquent, la liquéfaction des boues par les micro-ondes facilite grandement l'homogénéisation du mélange dans le réacteur 4, ce qui permet de simplifier le réacteur 4 du point de vue de son design (il peut par exemple consister en une simple tuyauterie circulant en flux piston, non représenté).

Le préchauffage de la vapeur par l'échangeur de chaleur 6 permet d'optimiser les consommations thermiques.

En outre, l'échangeur de chaleur 7 peut servir à la production d'énergie extérieure.

De plus si le prix de l'électricité est faible, le mode de réalisation de la figure 1 présente un grand intérêt économique.

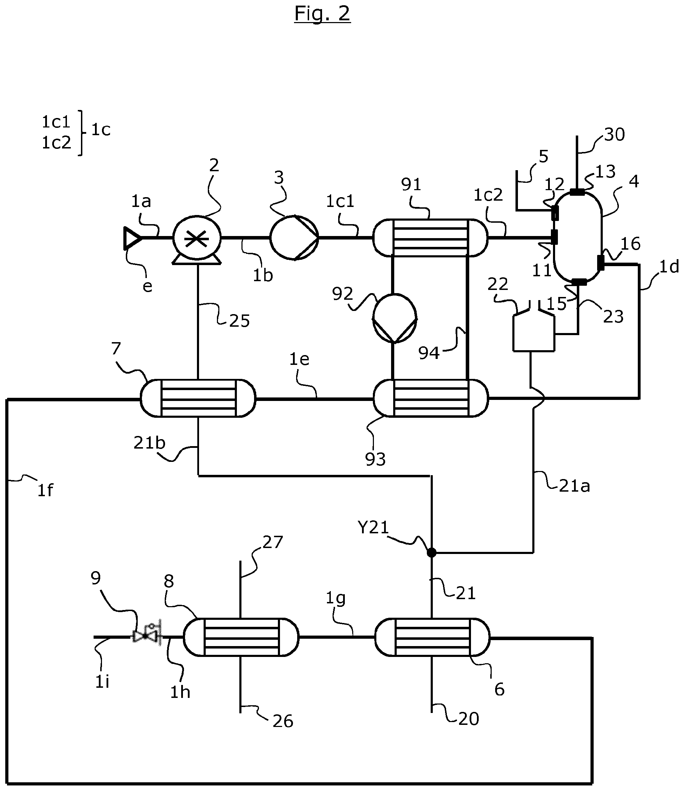

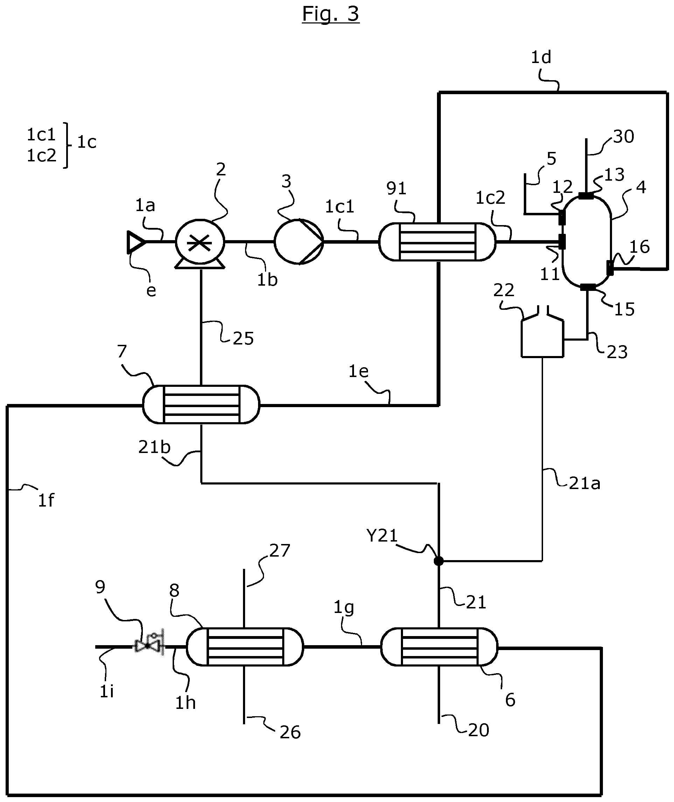

Les figures 2 et 3 représentent un deuxième et un troisième mode de réalisation de l'invention.

Plusieurs des constituants du dispositif des figures 2 et 3, notamment le réacteur 4 et son fonctionnement, sont similaires dans ces deuxième et troisième modes de réalisation et dans le premier mode de réalisation décrit ci-dessus.

Ainsi, les figures 2 et 3 sont décrites essentiellement suivant leurs différences avec la figure 1.

Dans ce deuxième et ce troisième mode de réalisation, le moyen de préchauffage 2 est agencé pour injecter de la vapeur dans les boues qu'il reçoit. Plus spécifiquement, l'étape de préchauffage comprend une étape d'injection exogène de vapeur dans laquelle on injecte de la vapeur dans les boues avant leur introduction dans le réacteur 4 pour élever leur température jusqu'à la température de préchauffage.

Plus qu'un préchauffage, ces modes de réalisation permettent de récupérer de la chaleur thermique injectée dans le système. En effet, les dispositifs des figures 2 et 3 comprennent en outre des moyens de chauffage additionnels 91, 92, 93, 94 agencés pour transférer de la chaleur contenue dans les boues extraites du réacteur 4 aux boues en aval du moyen de préchauffage 2 et en amont du réacteur 4, de manière à élever la température des boues en aval du moyen de préchauffage 2 et en amont du réacteur 4. Ces moyens de chauffage additionnels 91, 92, 93, 94 permettent donc de mettre en oeuvre une étape de chauffage additionnel dans laquelle on élève la température des boues ayant subies l'étape de préchauffage avant leur introduction dans le réacteur 4 en transférant à ces boues de la chaleur contenue dans les boues extraites du réacteur 4.

Ainsi, le préchauffage des boues s'effectue par un double système : d'une part, par une injection de vapeur exogène via le moyen de préchauffage 2 ; d'autre part, par un chauffage additionnel via les moyens de chauffage additionnels 91, 92, 93, 94. Dans les deux cas, le principe consiste à récupérer de la chaleur des boues extraites du réacteur 4 et à utiliser cette chaleur pour préchauffer les boues avant leur introduction dans le réacteur 4.

Dans ces modes de réalisation (figures 2 et 3), le dispositif comprend un échangeur de chaleur 7 agencé pour transformer en vapeur de l'eau circulant dans cet échangeur de chaleur 7 en utilisant de la chaleur contenue dans les boues extraites du réacteur 4, cette vapeur étant la vapeur injectée dans les boues en amont du réacteur 4 par le moyen de préchauffage 2. Pour ce faire, cette eau circule dans un conduit 25 reliant cet échangeur de chaleur 7 au moyen de préchauffage 2.

Cet échangeur de chaleur 7 sert à produire de la vapeur saturée ou légèrement surchauffée destinée à être injectée dans les boues circulant en amont du réacteur 4 par le moyen de préchauffage 2. Typiquement, la vapeur ainsi produite a une pression comprise entre 0,1 et 1 MPa, préférentiellement comprise entre 0,15 et 0,3 MPa.

L'échangeur de chaleur 7 est de type bouilleur à tubes de fumées ou consiste en tout autre échangeur apte à produire de la vapeur saturée.

L'eau circulant dans l'échangeur de chaleur 7 arrive par un conduit 21b avec une qualité compatible avec la production de vapeur désirée, notamment en termes d'adoucissement, de déminéralisation...

Les boues arrivant dans le moyen de préchauffage 2 par le conduit 1a y sont mélangées à de la vapeur de faible pression, typiquement comprise entre 0,1 et 1 MPa, à travers un dispositif de mélange dynamique ou statique compte-tenu des faibles quantités de vapeur utilisée (typiquement, 5-25% de vapeur par rapport aux boues en termes de masse). Cette vapeur présente typiquement une température comprise entre 100 et 120°C, et une pression comprise entre 0,15 et 0,3 MPa.

L'échangeur de chaleur 7 est dimensionné pour produire une quantité de vapeur adaptée pour :
a) refroidir les boues extraites du réacteur 4 et diminuer la température des boues passant par cet échangeur de chaleur 7. Typiquement, la température des boues sortant de l'échangeur de chaleur 7 est de l'ordre de 100-120°C;
b) préchauffer les boues en amont du réacteur 4 de telle sorte que celles-ci soient suffisamment liquéfiées en sortie du moyen de préchauffage 2. Typiquement, la température des boues en sortie du moyen de préchauffage 2 est de l'ordre de 50-140°C, préférentiellement 70-90°C.

En aval de la pompe 3 reliée au moyen de préchauffage 2 par le conduit 1b, les boues sont acheminées vers un échangeur 91 par un conduit 1c1 reliant la pompe 3 et cet échangeur 91. La liquéfaction des boues lors de l'étape de préchauffage favorise un bon échange thermique dans l'échangeur 91.

La pompe 3 achemine les boues liquéfiées sous pression à l'échangeur 91, à une pression correspondant à la pression de fonctionnement au sein du réacteur 4, augmentée par les pertes de charge de l'échangeur 91 situé en aval de cette pompe 3. Cette pression est typiquement de P_{réacteur}+ Pₚₑᵣₜₑₛ
où
- Pₚₑᵣₜₑₛ désigne les pertes de charges de l'échangeur 91 et des conduits 1c1 et 1c2 (le conduit 1c2 reliant l'échangeur 91 à la première entrée 11 du réacteur 4), typiquement comprises entre 0,1 à 1 MPa,
- P_{réacteur} désigne la pression nominale de fonctionnement du réacteur 4, typiquement comprise entre 0,6 et 3 MPa.

Le deuxième mode de réalisation (figure 2) et le troisième mode de réalisation (figure 3) se distingue par la nature de l'étape de chauffage additionnel : dans le mode de la figure 2, ce chauffage additionnel est de type indirect ; dans le mode de la figure 3, ce chauffage additionnel est de type direct.

Dans le deuxième mode de réalisation (figure 2), les boues sont chauffées par l'échangeur 91 par transfert de chaleur de ces boues avec un fluide caloporteur circulant dans une boucle 94, sous l'effet d'une pompe 92, entre cet échangeur 91 monté en amont du réacteur 4 et un échangeur 93 monté en aval du réacteur 4. Ce fluide caloporteur est chauffé par échange thermique dans l'échangeur 93 où il récupère de la chaleur contenue dans les boues extraites du réacteur 4. En circulant dans la boucle 94, la chaleur ainsi récupérée dans les boues extraites du réacteur 4 est transférée aux boues circulant dans l'échangeur 91 en amont du réacteur 4. Ce fluide caloporteur est réchauffé dans la boucle 94 à une température correspondant typiquement à la température du réacteur 4 diminuée de 20 à 80°C, typiquement 40°C, ce qui correspond aussi à la température de préchauffage dans le conduit 1c2 ajoutée de 20 à 80°C, typiquement 40°C. L'échangeur 93 peut être de tout type mais préférentiellement du type tube dans tube. Les boues refroidies par l'échangeur 93 sont ensuite acheminées vers l'échangeur de chaleur 7 par un conduit 1e.

Dans le troisième mode de réalisation (figure 3), les boues circulant dans l'échangeur 91 en provenance de la pompe 3 et à destination du réacteur 4 sont réchauffées par transfert de chaleur direct des boues extraites du réacteur 4 acheminées vers ce même échangeur 91 par le conduit 1d.

En sortie de l'échangeur 7, les boues, qui ont une température pouvant descendre jusqu'à 100°C, sont acheminées vers un échangeur tertiaire 6 par le conduit 1f. Cet échangeur tertiaire 6 permet de réaliser un échange de chaleur entre ces boues et de l'eau circulant dans cet échangeur tertiaire 6. Cette eau arrive dans l'échangeur tertiaire 6 par un conduit 20 et en sort par un conduit 21. L'eau circulant dans le conduit 21, ainsi réchauffée par échange thermique avec les boues dans l'échangeur tertiaire 6, est ensuite acheminée, via une bifurcation Y21 :
- d'une part, vers le conduit 21b relié à l'échangeur 7,
- d'autre part, vers un conduit 21a relié à la chaudière 22 fonctionnant selon le même principe que dans le premier mode de réalisation de la figure 1.

Typiquement, cet échangeur tertiaire 6 est de tout type possible et en particulier tube dans tube. L'eau arrivant cet échangeur tertiaire 6 par le conduit 27 est de qualité appropriée (adoucie ou déminéralisée) et à température ambiante. L'eau sortant de cet échangeur tertiaire 6 par le conduit 21 est à une température de l'ordre 60-100°C, préférentiellement 90°C. De préférence, cette eau sortant de l'échangeur tertiaire 6 est stockée dans un réservoir tampon (non représenté), par exemple au niveau de la bifurcation Y21. Ce réservoir tampon est par exemple une cuve adaptée aux besoins du dispositif en termes de génération de vapeur endogène ou exogène.

Cet échangeur tertiaire 6 permet de diminuer la température des boues à moins de 90°C, ce qui évite leur vaporisation lors de la décompression dans l'organe déprimogène 9.

Un dernier échangeur 8 peut être ajouté entre l'échangeur tertiaire 6 et l'organe déprimogène 9 afin de refroidir encore les boues à la température voulue avant décompression. Ce dernier échangeur 8 est ainsi relié à l'échangeur tertiaire 6 par un conduit 1g et à l'organe déprimogène 9 par un conduit 1h. Ce dernier échangeur 8 peut être de tout type connu. Il peut refroidir les boues par un fluide de type eau, air ou tout autre fluide frigorigène entrant dans ce dernier échangeur 8 par un conduit 26 et en sortant par un conduit 27. L'eau dans le conduit 27 peut être ou non récupérée pour des besoins process. Ce dernier échangeur 8, permet d'une part de produire des boues à des conditions thermiques optimales, et d'autre part de récupérer un complément d'énergie pouvant être utilisé à l'extérieur du procédé décrit.

L'organe déprimogène 9 permet de diriger les boues carbonisées vers un traitement adéquat.

Un exemple de bilan est le suivant :
Soit 1000 kg de boues à 20% de siccité et à 15°C.

On injecte 107 kg de vapeur à 0,13 MPa et 108°C dans le moyen de préchauffage 2 pour préchauffer les boues à 85°C.

On préchauffe ensuite les boues à 110°C dans l'échangeur 91 avant l'introduction dans le réacteur 4 puis on injecte 161 kg de vapeur à 25 MPa et 225°C dans le réacteur 4 pour le chauffer à 190°C.

En sortie de l'échangeur 93 (figure 2), les boues ayant subies la réaction de carbonisation hydrothermale ont une température de 164°C, réchauffant le fluide caloporteur circulant dans la boucle 94 à 145°C.

En sortie de l'échangeur 7, les boues sont à 105°C.

En sortie de l'échangeur tertiaire 6, les boues sont à 89°C.

En sortie du dernier échangeur 8, les boues sont à 80°C.

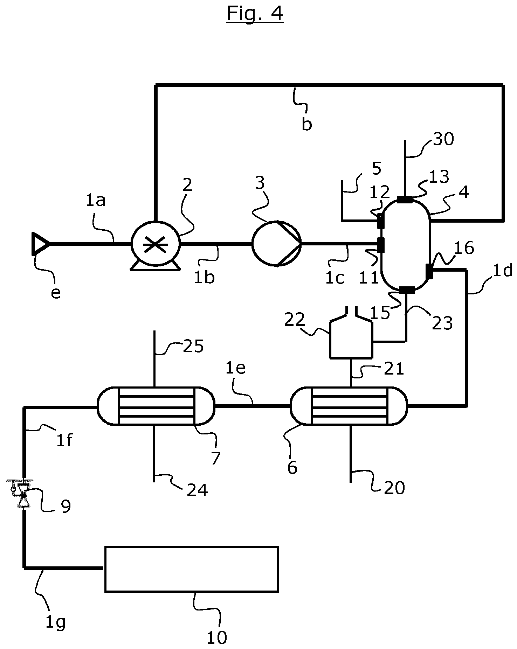

La figure 4 représente un quatrième mode de réalisation (hors de l'étendue de la présente invention) dans lequel le dispositif comprend les mêmes constituants mécaniques que le dispositif du premier mode de réalisation, à l'exception du moyen de préchauffage 2 relié au réacteur 4 par une boucle b de recirculation. Ainsi, la figure 4 est décrite essentiellement suivant ses différences avec la figure 1.

La boucle b de recirculation est agencée pour prélever une fraction des boues contenues dans le réacteur 4 et pour mélanger cette fraction avec les boues reçues par le moyen de préchauffage 2. Plus spécifiquement, ce dispositif permet de réaliser une étape de préchauffage qui comprend une étape de recirculation dans laquelle on prélève une fraction des boues contenues dans le réacteur 4 et dans laquelle on mélange cette fraction avec les boues avant leur introduction dans le réacteur 4, cela de manière à élever leur température jusqu'à la température de préchauffage.

Typiquement, la fraction de boues arrivant dans la boucle b de recirculation a une température comprise entre 50 et 140°C, préférentiellement 70-90°C.

La proportion de cette fraction de boues recirculées par rapport à la quantité de boues arrivant dans le moyen de préchauffage 2 par le conduit 1a est déterminée et pilotée pour obtenir des boues dans le moyen de préchauffage 2 à une température cible. Cette proportion peut être de l'ordre de 100%. Typiquement, la proportion D_{boues traitées}/D_{boues non traitées} est également à (T_{cible} - T_{non traitées})/ (T_{boues traitées} - T_{cible}) ± 10%, où :
- D_{boues traitées} désigne le débit de la fraction de boues recirculée qui est injectée dans le flux de boues froides non traitées arrivant dans le moyen de préchauffage 2 par le conduit 1a dont le débit est D_{boues non traitées}
- T_{cible} correspond à la température de préchauffage visée, par exemple 90°C, avant introduction dans le réacteur 4
- T_{boues traitées} correspond à la température des boues traitées, en sortie du réacteur 4, par exemple 180°C
- T_{boues non traitées} correspond à la température des boues non traitées dans le conduit 1a, à température ambiante, par exemple 15°C.

Bien sûr, l'invention n'est pas limitée aux exemples qui viennent d'être décrits et de nombreux aménagements peuvent être apportés à ces exemples sans sortir du cadre de l'invention Par exemple, la boucle b de recirculation de la figure 4 pourrait être incorporée au mode de réalisation de la figure 2 ou 3. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de carbonisation hydrothermale en continu de boues contenant de la matière organique, lesdites boues présentant une siccité comprise entre 10 et 30%, ledit procédé comportant une étape de réaction hydrothermale mise en oeuvre dans un réacteur (4), l'étape de réaction hydrothermale comprenant les étapes suivantes :
- une étape d'introduction de boues dans laquelle on introduit les boues dans le réacteur (4) par une première entrée (11),
- une étape d'injection endogène de vapeur dans laquelle on injecte de la vapeur dans le réacteur (4) par une deuxième entrée (15),
- une étape d'extraction dans laquelle on extrait en continu au moins une partie des boues contenues dans le réacteur (4) par une sortie de boues (16),
**caractérisé en ce qu'**il comporte en outre une étape de préchauffage dans laquelle on élève la température des boues avant leur introduction dans le réacteur (4) jusqu'à une température de préchauffage supérieure à 70°C,
**en ce que** la deuxième entrée (15) est distincte de la première entrée (11),
**en ce que** l'étape de préchauffage comprend une étape d'injection exogène de vapeur dans laquelle on injecte de la vapeur dans les boues avant leur introduction dans le réacteur (4),
et **en ce qu'**il comporte en outre une étape de chauffage additionnel dans laquelle on élève la température des boues ayant subies l'étape de préchauffage avant leur introduction dans le réacteur (4) en transférant à ces boues de la chaleur contenue dans les boues extraites du réacteur (4).

2. Procédé selon la revendication 1, **caractérisé en ce que** l'étape de préchauffage comprend une étape d'injection de micro-ondes dans laquelle on injecte des micro-ondes dans les boues avant leur introduction dans le réacteur (4).

3. Procédé selon l'une des revendications 1 à 2, **caractérisé en ce que** l'étape de préchauffage comprend une étape de recirculation dans laquelle on prélève une fraction des boues contenues dans le réacteur (4) et dans laquelle on mélange cette fraction avec les boues avant leur introduction dans le réacteur (4).

4. Procédé selon l'une des revendications 1 à 3, **caractérisé en ce qu'**il comprend en outre une étape de mise en circulation dans laquelle on met un mélange constitué par les boues contenues dans le réacteur (4) et la vapeur injectée dans le réacteur (4) en circulation au sein du réacteur (4).

5. Procédé selon l'une quelconque des revendications précédentes, **caractérisé en ce qu'**il comporte en outre une étape de chauffage d'eau dans laquelle on transfère de la chaleur contenue dans les boues extraites du réacteur (4) à de l'eau par l'intermédiaire d'un échangeur de chaleur (6), et dans laquelle on utilise l'eau ainsi chauffée pour produire tout ou partie de la vapeur utilisée lors de l'étape d'injection endogène de vapeur.

6. Dispositif de carbonisation hydrothermale en continu de boues contenant de la matière organique, lesdites boues présentant une siccité comprise entre 10 et 30%, ce dispositif comprenant un réacteur (4) comportant :
- une première entrée (11) agencée pour introduire les boues dans le réacteur (4),
- une deuxième entrée (15) agencée pour injecter directement dans le réacteur (4) de la vapeur,
- une sortie de boues (16) agencée pour extraire du réacteur (4) en continu au moins une partie des boues qu'il contient,
**caractérisé en ce qu'**il comprend en outre un moyen de préchauffage (2) en amont de la première entrée (11), ce moyen de préchauffage (2) étant agencé pour recevoir les boues avant leur introduction dans le réacteur (4) et pour élever la température des boues qu'il reçoit jusqu'à une température de préchauffage supérieure à 70°C,
**en ce que** la deuxième entrée (15) est distincte de la première entrée (11), **en ce que** le moyen de préchauffage (2) est agencé pour injecter de la vapeur dans les boues qu'il reçoit, et **en ce qu'**il comprend en outre des moyens de chauffage additionnels (91, 92, 93, 94) agencés pour transférer de la chaleur contenue dans les boues extraites du réacteur (4) aux boues en aval du moyen de préchauffage (2) et en amont du réacteur (4), de manière à élever la température des boues en aval du moyen de préchauffage (2) et en amont du réacteur (4).

7. Dispositif selon la revendication 6, **caractérisé en ce que** le moyen de préchauffage (2) est agencé pour injecter des micro-ondes dans les boues qu'il reçoit.

8. Dispositif selon l'une des revendications 6 à 7, **caractérisé en ce qu'**il comprend une boucle (b) de recirculation agencée pour prélever une fraction des boues contenues dans le réacteur (4) et pour mélanger cette fraction avec les boues reçues par le moyen de préchauffage (2).

9. Dispositif selon l'une quelconque des revendications 6 à 8, **caractérisé en ce qu'**il comprend en outre un échangeur de chaleur (6) et une chaudière (22), cet échangeur de chaleur (6) étant agencé pour transférer de la chaleur contenue dans les boues extraites du réacteur (4) à de l'eau circulant entre cet échangeur de chaleur (6) et la chaudière (22), la chaudière (22) étant agencée pour fournir tout ou partie de la vapeur injectée dans le réacteur (4) par la deuxième entrée (15).

## Patentansprüche

1. Verfahren zur kontinuierlichen hydrothermalen Karbonisierung von Schlämmen, die organische Materie enthalten, wobei die Schlämme einen Trockengehalt zwischen 10 und 30 % aufweisen, wobei das Verfahren einen Schritt der hydrothermalen Reaktion aufweist, der in einem Reaktor (4) durchgeführt wird, wobei der Schritt der hydrothermalen Reaktion die folgenden Schritte umfasst:
- einen Schritt der Einleitung von Schlämmen, bei dem die Schlämme in den Reaktor (4) über einen ersten Einlass (11) eingeleitet werden,
- einen Schritt der endogenen Einblasung von Dampf, bei dem Dampf in den Reaktor (4) über einen zweiten Einlass (15) eingeblasen wird,
- einen Schritt der Extraktion, bei dem kontinuierlich wenigstens ein Teil der in dem Reaktor (4) enthaltenen Schlämme über einen Schlammauslass (16) extrahiert wird,
**dadurch gekennzeichnet, dass** es ferner einen Schritt der Vorerhitzung aufweist, bei dem die Temperatur der Schlämme vor ihrer Einleitung in den Reaktor (4) auf eine Vorerhitzungstemperatur erhöht wird, die größer ist als 70 °C,
dadurch, dass der zweite Einlass (15) von dem ersten Einlass (11) verschieden ist,
dadurch dass der Schritt der Vorerhitzung einen Schritt der exogenen Einblasung von Dampf umfasst, bei dem Dampf in die Schlämme vor ihrer Einleitung in den Reaktor (4) eingeblasen wird,
und dadurch, dass es ferner einen Schritt der zusätzlichen Erhitzung aufweist, bei dem die Temperatur der Schlämme, die dem Schritt der Vorerhitzung unterzogen wurden, vor ihrer Einleitung in den Reaktor (4) erhöht wird, indem an diese Schlämme Wärme übertragen wird, die in den aus dem Reaktor (4) extrahierten Schlämmen enthalten ist.

2. Verfahren nach Anspruch 1, **dadurch gekennzeichnet, dass** der Schritt der Vorerhitzung einen Schritt der Einkopplung von Mikrowellen umfasst, bei dem Mikrowellen in die Schlämme vor ihrer Einleitung in den Reaktor (4) eingekoppelt werden.

3. Verfahren nach einem der Ansprüche 1 bis 2, **dadurch gekennzeichnet, dass** der Schritt der Vorerhitzung einen Schritt der Rezirkulation umfasst, bei dem eine Fraktion der in dem Reaktor (4) enthaltenen Schlämme entnommen wird, und bei dem diese Fraktion mit den Schlämmen vor ihrer Einleitung in den Reaktor (4) gemischt wird.

4. Verfahren nach einem der Ansprüche 1 bis 3, **dadurch gekennzeichnet, dass** es ferner einen Schritt der Versetzung in Zirkulation umfasst, bei dem ein Gemisch, das aus den in dem Reaktor (4) enthaltenen Schlämmen und dem in den Reaktor (49 eingeblasenen Dampf besteht, im Inneren des Reaktors (4) in Zirkulation versetzt wird.

5. Verfahren nach einem der vorhergehenden Ansprüche, **dadurch gekennzeichnet, dass** es ferner einen Schritt der Erhitzung von Wasser aufweist, bei dem Wärme, die in den aus dem Reaktor (4) extrahierten Schlämmen enthalten ist, mit Hilfe eines Wärmetauschers (6) an Wasser übertragen wird, und bei dem das so erhitzte Wasser verwendet wird, um den gesamten Dampf oder einen Teil des Dampfes, der bei dem Schritt der endogenen Einblasung von Dampf verwendet wird, zu erzeugen.

6. Vorrichtung zur kontinuierlichen hydrothermalen Karbonisierung von Schlämmen, die organische Materie enthalten, wobei die Schlämme einen Trockengehalt zwischen 10 und 30 % aufweisen, wobei diese Vorrichtung einen Reaktor (4) umfasst, aufweisend:
- einen ersten Einlass (11), der angeordnet ist, um die Schlämme in den Reaktor (4) einzuleiten,
- einen zweiten Einlass (15), der angeordnet ist, um Dampf direkt in den Reaktor (4) einzublasen,
- einen Schlammauslass (16), der angeordnet ist, um aus dem Reaktor (4) kontinuierlich wenigstens einen Teil Schlämme, die er enthält, zu extrahieren,
**dadurch gekennzeichnet, dass** er ferner ein Mittel zur Vorerhitzung (2) stromaufwärts des ersten Einlasses (11) umfasst, wobei dieses Mittel zur Vorerhitzung (2) angeordnet ist, um die Schlämme vor ihrer Einleitung in den Reaktor (4) aufzunehmen und um die Temperatur der Schlämme, die es aufnimmt, auf eine Vorerhitzungstemperatur zu erhöhen, die größer ist als 70 °C,
dadurch dass der zweite Einlass (15) von dem ersten Einlass (11) verschieden ist,
dadurch dass das Mittel zur Vorerhitzung (2) angeordnet ist, um Dampf in die Schlämme, die es aufnimmt, einzublasen, und dadurch, dass sie ferner Mittel zur zusätzlichen Erhitzung (91, 92, 93, 94) umfasst, die angeordnet sind, um Wärme, die in den aus dem Reaktor (4) extrahierten Schlämmen an die Schlämme stromabwärts des Mittels zur Vorerhitzung (2) und stromaufwärts des Reaktors (4) zu übertragen, so dass die Temperatur der Schlämme stromabwärts des Mittels zur Vorerhitzung (2) und stromaufwärts des Reaktors (4) erhöht wird.

7. Vorrichtung nach Anspruch 6, **dadurch gekennzeichnet, dass** das Mittel zur Vorerhitzung (2) angeordnet ist, um Mikrowellen in die Schlämme, die es aufnimmt, einzukoppeln.

8. Vorrichtung nach einem der Ansprüche 6 bis 7, **dadurch gekennzeichnet, dass** es einen Rezirkulationskreislauf (b) umfasst, der angeordnet ist, um eine Fraktion der in dem Reaktor (4) enthaltenen Schlämme zu entnehmen und diese Fraktion mit den von dem Mittel zur Vorerhitzung (2) aufgenommenen Schlämmen zu mischen.

9. Vorrichtung nach einem der Ansprüche 6 bis 8, **dadurch gekennzeichnet, dass** sie ferner einen Wärmetauscher (6) und einen Kessel (22) umfasst, wobei dieser Wärmetauscher (6) angeordnet ist, um Wärme, die in den aus dem Reaktor (4) extrahierten Schlämmen enthalten ist, an Wasser, das zwischen diesem Wärmetauscher (6) und dem Kessel (22) zirkuliert, zu übertragen, wobei der Kessel (22) angeordnet ist, um den gesamten Dampf oder einen Teil des Dampfes, der über den zweiten Einlass (15) in den Reaktor (4) eingeblasen wird, bereitzustellen.

## Claims

1. A method of continuous hydrothermal carbonization of sludge containing organic matter, said sludge having a dryness between 10 and 30%, said method involving a stage of hydrothermal reaction carried out in a reactor (4), the hydrothermal reaction stage involving the following steps:
- a step of introduction of sludge in which the sludge is introduced into the reactor (4) by a first inlet (11),
- a step of endogenous injection of steam in which steam is injected into the reactor (4) by a second inlet (15),
- a step of extraction in which at least a portion of the sludge contained in the reactor (4) is extracted continuously by a sludge outlet (16),
**characterized in that** it further involves a step of preheating in which the temperature of the sludge is raised prior to its introduction into the reactor (4) up to a temperature of preheating greater than 70° C,
**in that** the second inlet (15) is distinct from the first inlet (11),
**in that** the step of preheating includes a step of exogenous steam injection in which steam is injected into the sludge prior to its introduction into the reactor (4),
and **in that** it furthermore involves a step of additional heating in which the temperature is raised for the sludge having undergone the step of preheating prior to its introduction into the reactor (4) by transferring to this sludge the heat contained in the sludge extracted from the reactor (4).

2. The method as claimed in claim 1, **characterized in that** the step of preheating includes a step of microwave injection in which microwaves are injected into the sludge prior to its introduction into the reactor (4).

3. The method as claimed in claim 1 or 2, **characterized in that** the step of preheating involves a step of recirculation in which a fraction of the sludge contained in the reactor (4) is removed and in which this fraction is mixed with the sludge prior to its introduction into the reactor (4).

4. The method as claimed in one of claims 1 to 3, **characterized in that** it furthermore involves a step of circulation in which a mixture consisting of the sludge contained in the reactor (4) and the steam injected into the reactor (4) is placed in circulation within the reactor (4).

5. The method as claimed in any one of the preceding claims, **characterized in that** it further involves a step of heating of water in which heat contained in the sludge extracted from the reactor (4) is transferred to water by means of a heat exchanger (6), and in which the water so heated is used to produce some or all of the steam used during the step of endogenous steam injection.

6. A device for continuous hydrothermal carbonization of sludge containing organic matter, said sludge having a dryness between 10 and 30%, this device comprising a reactor (4) having:
- a first inlet (11) designed to introduce the sludge into the reactor (4),
- a second inlet (15) designed to inject steam directly into the reactor (4),
- a sludge outlet (16) designed to continuously extract at least a portion of the sludge contained in the reactor (4) from it,
**characterized in that** it furthermore comprises a means of preheating (2) upstream from the first inlet (11), this means of preheating (2) being designed to receive the sludge prior to its introduction into the reactor (4) and to raise the temperature of the sludge which it receives up to a temperature of preheating greater than 70° C,
**in that** the second inlet (15) is distinct from the first inlet (11),
**in that** the means of preheating (2) is designed to inject steam into the sludge which it receives, and **in that** it furthermore comprises means of additional heating (91, 92, 93, 94), designed to transfer heat contained in the sludge extracted from the reactor (4) to the sludge downstream from the means of preheating (2) and upstream from the reactor (4), so as to raise the temperature of the sludge downstream from the means of preheating (2) and upstream from the reactor (4).

7. The device as claimed in claim 6, **characterized in that** the means of preheating (2) is designed to inject microwaves into the sludge which it receives.

8. The device as claimed in claim 6 or 7, **characterized in that** it comprises a recirculation loop (b) designed to remove a fraction of the sludge contained in the reactor (4) and to mix this fraction with the sludge received by the means of preheating (2).

9. The device as claimed in any one of claims 6 to 8, **characterized in that** it further comprises a heat exchanger (6) and a boiler (22), this heat exchanger (6) being designed to transfer heat contained in the sludge extracted from the reactor (4) to water circulating between this heat exchanger (6) and the boiler (22), the boiler (22) being designed to furnish some or all of the steam injected into the reactor (4) by the second inlet (15).
